# EUROPÄISCHE PATENTANMELDUNG

(11) **EP 2 597 398 A2**
(43) Veröffentlichungstag der Anmeldung: **29.05.2013**
(21) Anmeldenummer: 12168533.3
(22) Anmeldetag: 18.05.2012
(51) Int. Cl.: F24J 2/52, H01L 31/042

(54) **Modulrahmen für ein Fotovoltaik- oder Solarmodul**

(30) Priorität: 28.11.2011 DE 202011052119 U
(71) Anmelder: SCHÜCO International KG, 33609 Bielefeld (DE)
(72) Erfinder: Morel, Olivier, 78955 CARRIERES-SOUS-POISSY (FR); Hoyeau, Philippe, 78550 DANNEMARIE (FR); Hamid, Batoul Hamid, Batoul, 91120 Palaiseau (FR)
(74) Vertreter: Specht, Peter

(57) **Zusammenfassung**

Modulrahmen für ein Fotovoltaik- oder Solarmodul (1), welches folgendes aufweist:
a) ein oberes Rahmenprofil (2),
b) ein unteres Rahmenprofil (3),
c) ein linkes Rahmenprofil (4) und
d) ein rechtes Rahmenprofil (5),
e) wobei jedes der Rahmenprofile (2, 3, 4, 5) eine Aufnahme (6) für das Fotovoltaik- oder Solarmodul (1) aufweist,
wobei
f) das untere Rahmenprofil (3) als offenes Hohlprofil (7) ausgebildet ist und eine Aufnahme (8) für ein oberes Rahmenprofil (2) eines weiteren Modulrahmens aufweist.

## Beschreibung

Die Erfindung betrifft einen Modulrahmen für ein Fotovoltaik- oder Solarmodul nach dem Oberbegriff des Anspruchs 1.

Modulrahmen der gattungsgemäßen Art dienen als vorzugsweise tragendes Rahmenprofil, aus dem ein umlaufender Rahmen für das Fotovoltaik-oder Solarmodul gebildet ist. Solche Module werden in der Regel auf einem Gebäudedach angeordnet. Dabei kann das Modul auf dem eigentlichen Dach angeordnet werden; es gibt aber auch Module, die als so genannte Indachmodule ausgebildet sind. Solche Indachmodule dienen nicht nur der Energiegewinnung als solche durch das Fotovoltaik- oder Solarmodul, sondern auch als Dachabdeckung. So werden sie beispielsweise in Kombination mit Dachpfannen in Dachbereichen, in denen diese entfernt wurden bzw. nicht vorhanden sind auch zur Dachabdeckung genutzt.

Ein bekannter Modulrahmen wird beispielsweise in der DE 295 21 277 U1 beschrieben. Die dort beschriebenen Rahmenprofile zeigen zwei nach innen gerichteten Nuten, die zur Aufnahme von Abdeckungen dienen. Die Abdeckungen bestehen üblicherweise am oberen Ende des Rahmenprofils aus transparenten Deckplatten, wie zum Beispiel Glasscheiben, die in Dichtungen in den Nuten eingefasst sind, und an der Unterseite zum Baukörper gerichtet, aus Blechen. Zwischen den beiden Abdeckungen ist der eigentliche Sonnenkollektor der DE 295 21 277 U1 beschrieben.

Ferner ist in der DE 199 15 504 B4 ein modifizierter Modulrahmen dargestellt, der eine multifunktionale Nut zur verbesserten Entwässerung und zur Aufnahme von verschiedenen Elementen, wie beispielsweise Dichtungen, Kopplungselemente, Griffe und dergleichen aufweist.

Gattungsgemäße Modulrahmen werden zudem in der EP 1 777 357 und der US 6 105 317 beschrieben. Die Montage der Modulrahmen auf einem Dach sowie die Verbindung der Modulrahmen untereinander ist bei diesen bekannten Rahmen nur mit relativ vielen Bauelementen und auch nur durch eine aufwendige Montage zu bewerkstelligen.

Obwohl die im Stand der Technik bekannten Modulrahmen im Wesentlichen den Anforderungen genügen, ist es aufgrund unterschiedlicher nationaler Rechtsvorschriften erforderlich, verschiedene Modulrahmen vorzuhalten, so dass für die unterschiedlichsten Rechtsvorschriften nutzbare Modulrahmen zur Verfügung stehen.

Es ist daher Aufgabe der Erfindung, einen alternativen Modulrahmen für Fotovoltaik-oder Solarmodule zur Verfügung zu stellen, der den Anforderungen eines Modulrahmens an die praktischen Gegebenheiten, insbesondere aber nicht ausschließlich als Indachmodulrahmen gerecht wird.

Gelöst wird dieser Aufgabe durch einen Modulrahmen mit allen Merkmalen des Patentanspruchs 1. Sie schafft ferner eine Modulanordnung nach Anspruch 27 mit einem Modulrahmen und einem Fotovoltaik- oder Solarmodul nach einem der Ansprüche 1 bis 26 und eine Modulreihung aus mehreren der Module nach Anspruch 28 in wenigstens einer Reihe oder mehreren Reihen nebeneinander. Dabei werden Modulanordnungen horizontal nebeneinander auf einem Schrägdach angeordnet sowie schräg übereinander in einer Reihe, was im Kontext dieser Anmeldung nachfolgend u.a. auch als vertikale Reihung/Reihe bezeichnet werden wird.

Vorteilhafte Ausgestaltungen der Erfindung finden sich in den Unteransprüchen.

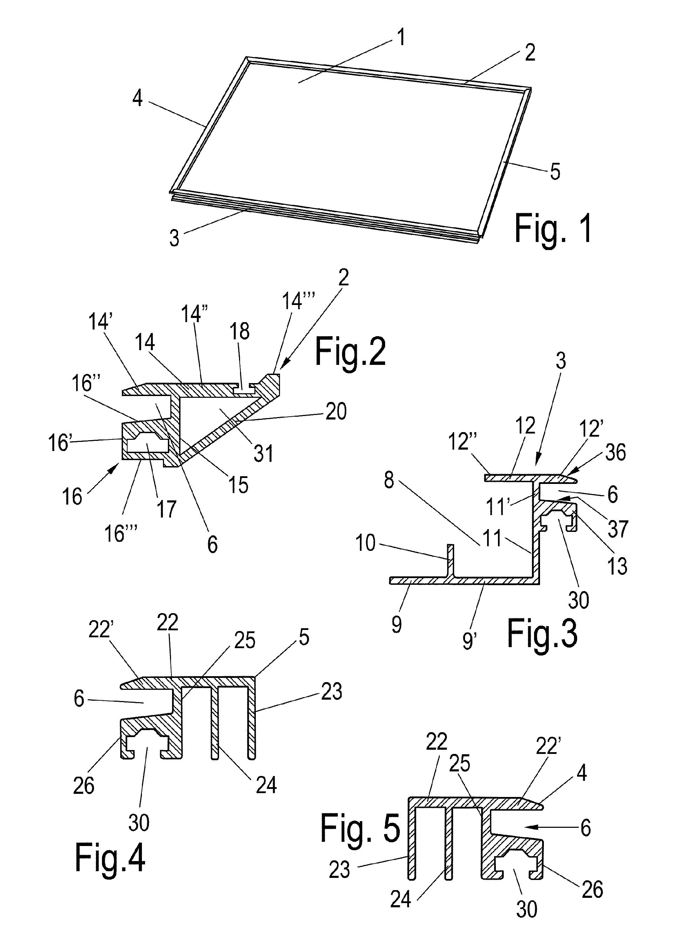

Begriffe wie "oben", "unten", "rechts" und "links" beziehen sich dabei auf eine Anordnung auf einem Schrägdach in üblicher Ausrichtung, auf dem ein unterer horizontaler und ein oberer Dachrand gegeben sind und auf dem mit den beanspruchten Modulen mit den Modulrahmen eine Anordnung insbesondere nach Art der Ausrichtung der Fig. 1 realisierbar ist.

Der erfindungsgemäße Modulrahmen für ein Fotovoltaik- oder Solarmodul weist in dieser Ausrichtung ein oberes Rahmenprofil, ein unteres Rahmenprofil, ein linkes Rahmenprofil und ein rechtes Rahmenprofil auf, wobei jedes der Rahmenprofile eine Aufnahme für das Fotovoltaik- oder Solarmodul aufweist. Dabei soll hier im Folgenden unter Aufnahme für das Fotovoltaik- oder Solarmodul auch verstanden werden, dass darin nicht nur das Fotovoltaik- oder Solarmodul als solches, sondern auch Elemente aufgenommen sind, welche das eigentliche Fotovoltaik- oder Solarmodul (bevorzugt ein elektrischen Strom erzeugendes Solarzellensolarmodul) tragen. Vorteilhafterweise ist das untere Rahmenprofil dabei als offenes Hohlprofil ausgebildet und weist eine Aufnahme für ein oberes Rahmenprofil eines weiteren Modulrahmens auf.

Durch diese erfindungsgemäße Ausgestaltung ist es möglich, den gesamten Modulrahmen nur mit dem unteren Rahmenprofil an der Dachkonstruktion zu befestigen und untereinander angeordnete Modulrahmen gegeneinander zu fixieren und miteinander zu verbinden und abzudichten.

Durch die Befestigung des unteren Rahmenprofils ist der Modulrahmen an oder auf der Dachkonstruktion fixiert, so dass sich die Anbringung weiterer Modulrahmen an dem einmal nur an seinem unteren Profil befestigten ersten "oberen" Modulrahmen einer Anordnung aus mehreren der Rahmen orientiert.

Die Fixierung bzw. Anbringung weiterer Modulrahmen erfolgt vorzugsweise dadurch, dass in die Aufnahme des unteren Rahmenprofils das obere Rahmenprofil eines weiteren Modulrahmens eingelegt - insbesondere eingeschwenkt - wird und dieser dann mit seinem unteren Rahmenprofil ebenfalls an oder auf der Dachkonstruktion befestigt bzw. fixiert wird. In der Praxis wird also mit der Installation des obersten Modulrahmens begonnen und die Anbringung weiterer Modulrahmen nach unten fortgeführt.

Dabei hat es sich ferner als vorteilhaft erwiesen, dass das untere Rahmenprofil im Wesentlichen aus einem Grundschenkel, einem darauf im Wesentlichen senkrecht stehenden ersten Halteschenkel, einem Seitenschenkel, einem oberen Abdeckschenkel und einem weiteren zweiten Halteschenkel besteht. Dabei bildet ein Schenkelabschnitt des Abdeckschenkels zusammen mit dem zweiten Halteschenkel und einem Schenkelabschnitt des Seitenschenkels die Aufnahme für das Fotovoltaik-oder Solarmodul.

Ferner bilden ein Schenkelabschnitt des Abdeckschenkels zusammen mit einem Schenkelabschnitt des Grundschenkels, dem ersten Halteschenkel und dem Seitenschenkel die Aufnahme eines oberen Rahmenprofils eines weiteren, in einer Modulreihung auf einem Dach benachbarten, Modulrahmens für ein Fotovoltaik- oder Solarmodul.

Durch diese Ausführung des unteren Rahmenprofils ergibt sich in einfacher Weise in Form eines in seiner Längserstreckung offenen Hohlprofils die Aufnahme für ein oberes Rahmenprofil eines weiteren Modulrahmens. Gleichzeitig wird durch dieses offene Hohlprofil sowohl die Steifigkeit als auch die Verdrehfestigkeit des unteren Rahmenprofils und damit des gesamten Modulrahmens. In vorteilhafter Weise erhöht. Das untere Rahmenprofil ist somit multifunktional ausgestalten, da dadurch vorteilhafte Wirkungen sowohl hinsichtlich seiner Stabilität als auch für die Aufnahme eines oberen Rahmenprofils eines weiteren Modulrahmens realisierbar sind.

Der Begriff "im Wesentlichen" umfasst hier jeweils den exakten Fall (d.h. z.B. "im Wesentlichen senkrecht" bedeutet "exakt senkrecht" und den in praktisch irrelevantem Maß hiervon abweichenden Fall (z.B. bei einer Winkelangabe einen Winkel, der weniger als 10° von dem angegebenen Winkel abweicht).

Nach einem weiteren Gedanken der Erfindung weist das obere Rahmenprofil einen Grundschenkel, einen darauf im Wesentlichen senkrecht stehenden Seitenschenkel und einen Halteschenkel auf, wobei ein Schenkelabschnitt des Grundschenkels zusammen mit dem Halteschenkel und einem Schenkelabschnitt des Seitenschenkels die Aufnahme für das Fotovoltaik- oder Solarmodul bildet. Dadurch ergibt sich ein oberes Rahmenprofil, welches mit dem unteren Rahmenprofils eines weiteren erfindungsgemäßen Modulrahmens derart zusammenwirkt, dass zwei Modulrahmen einfach und sicher ohne Zuhilfenahme von Werkzeugen gegeneinander fixiert werden können. Dazu wird nämlich einfach das obere Rahmenprofil eines Modulrahmens in das untere Rahmenprofil eines weiteren Modulrahmens derart eingelegt, dass sich der obere Modulrahmen mit einem Teilabschnitt des Seitenschenkels und mit einem Teilabschnitt des Halteschenkels an dem Halteschenkel des unteren Rahmenprofil des weiteren Modulrahmens abstützt. Gleichzeitig überlappen sich dabei der Abdeckschenkel des unteren Rahmenprofils des einen Modulrahmens und der Grundschenkel des oberen Rahmenprofils des anderen Modulrahmens zumindest in Teilabschnitten. Dadurch ist gewährleistet, dass bei Modulen, die an einer Dachschrägen angebracht werde, kein Wasser in die Modulrahmen eindringt, da es über die sich überlappenden Bereiche der untereinander angeordneten Modulrahmen sicher ablaufen kann.

Dass dies wirkungsvoll erzielt wird, setzt eine sichere Abdichtung der in die entsprechenden Aufnahmen eingesetzten Fotovoltaik- oder Solarmodule voraus. Dazu werden diese Aufnahmen vor dem Zusammenbau der Modulrahmen mit einer Dichtungsmasse, vorzugsweise einer Silikonmasse gefüllt. Werden dann die Fotovoltaik-oder Solarmodule in die Aufnahmen eingeführt, verdrängen sie die Dichtungsmasse, wobei im Endzustand die Fotovoltaik- oder Solarmodule dann in der Aufnahme vollflächig von Dichtungsmasse umgeben sind. Alternativ zur Dichtungsmasse kann auch eine Umlaufdichtung, z.B. aus EPDM, eingesetzt werden. Durch diese Maßnahme ist auch die Dichtheit der Module in diesem Bereich sichergestellt.

Um die Dichtigkeit im Bereich der überlappenden Bereiche zweier Modulrahmen nochmals zu erhöhen, weist der Grundschenkel eine Nut zur Aufnahme einer Dichtung auf. Dadurch wird auch verhindert, dass Feuchtigkeit z.B. in Folge von Winddruck oder Adhäsion durch die Verbindung in die Modulrahmen eindringt. Die Nut für diese Dichtung verläuft dabei idealerweise über die gesamte Längserstreckung des Grundschenkels des oberen Rahmenprofils. Es versteht sich von selbst, dass die Dichtung zwischen den horizontalen Rahmenprofilen auch am unteren Rahmenprofil angeordnet werden kann.

Damit zu verbindende Modulrahmen in unkomplizierter Weise schnell und sicher miteinander verbunden werden können, ist vorgesehen, dass der Grundschenkel des oberen Rahmenprofils zusammen mit dem darauf im Wesentlichen senkrecht stehenden Seitenschenkel und einem Verbindungsschenkel ein im Querschnitt dreieckiges - vorzugsweise keilförmiges - Hohlprofil bildet, welches sich vorzugsweise über die gesamte Längsausdehnung des oberen Rahmenprofils erstreckt. Durch diese Ausgestaltung des oberen Rahmenprofils ist es möglich, einen Modulrahmen mit seinem oberen Rahmenprofil in die dafür vorgesehen Aufnahme eines unteren Rahmenprofils eines anderen Modulrahmens einzuführen. Dazu wird der Modulrahmen mit dem oberen Rahmenprofil schräg in die Aufnahme des unteren Rahmenprofils des anderen Modulrahmens vorzugsweise schwenkend eingeführt und anschließend abgesenkt, bis beide Modulrahmen eine im Wesentlichen ebene Fläche bilden. In diesem Zustand stützen sich die Halteschenkel in der bereits zuvor beschriebenen Art und Weise aneinander ab, so dass beide Modulrahmen sicher gegeneinander fixiert sind.

Nach einer weiteren vorteilhaften Ausgestaltung der Erfindung bildet der Halteschenkel des oberen Rahmenprofils mit seinen Teilabschnitten und einem Teilabschnitt des Seitenschenkels ein Hohlprofil. Auch diese Maßnahme zielt zum einen auf eine höhere Stabilität des gesamten Modulrahmens in Folge erhöhter Steifigkeit und Verdrehfestigkeit des oberen Rahmenprofils ab. Zum andern ergibt sich bei einem über seine Längserstreckung zumindest teilweise geschlossenen Hohlprofils der Vorteil, dass die Dilatation des Modulrahmens aufgrund des doch sehr großen Temperaturbereiches im Einsatz eines solchen Modulrahmens keinen Einfluss auf die Verbindung zweier Modulrahmen nimmt.

Wäre das Hohlprofil über seine gesamte Längserstreckung offen, könnten bei hohen Temperaturschwankungen Dilatationen der Modulrahmen auftreten, in Folge deren das sicher Abstützen der Halteschenkel von oberen und unteren Rahmenprofilen der verbundenen Module nicht gewährleisten werden könnte. Vielmehr könnte der Halteschenkel des unteren Rahmenprofils des einen Modulrahmens in das offene Hohlprofil des Halteschenkels des oberen Profilrahmens des anderen Modulrahmens rutschen und somit die Verbindung lockern, so dass es bei weiteren Dilatationen insbesondere durch Temperaturänderungen zu Spannungen in den Modulrahmen kommen könnte. Solche Spannungsbelastungen können im Extremfall zu Rissbildungen im Modulrahmen führen, so dass der so geschädigte Modulrahmen seinen Anforderungen hinsichtlich Dichtheit nicht mehr gerecht werden kann und ausgetauscht werden müsste. Durch die erfindungsgemäße Ausgestaltung des Halteschenkels des oberen Rahmenprofils werden solche auf Dilatationen beruhenden Schäden wirkungsvoll vermieden, da der Halteschenkel des unteren Rahmenprofils des einen Modulrahmens auf dem Halteschenkel des oberen Rahmenprofils hin und her gleiten kann und somit ein Dilatationsausgleich stattfindet.

Das linke und das rechte Rahmenprofil des Modulrahmens weisen vorzugsweise jeweils einen Grundschenkel und darauf im Wesentlichen senkrecht stehende - vorzugsweise drei - Seitenschenkel und einen an einem Seitenschenkel angeordneten Halteschenkel auf. Der Halteschenkel bildet dabei zusammen mit einem Teilabschnitt des Grundschenkels eine Aufnahme für das Fotovoltaik- oder Solarmodul.

Dabei hat es sich als vorteilhaft erwiesen, dass das linke und rechte Rahmenprofil im montierten Zustand im Wesentlichen spiegelsymmetrisch zu einer Mittelachse des Fotovoltaik- oder Solarmoduls ausgebildet sind. Dadurch ist es möglich, das gleiche Rahmenprofil als linkes und rechtes Rahmenprofil zu verwenden. Separate Produktionen sind deshalb nicht notwendig.

Weiterhin ist es vorteilhaft, dass die einzelnen Rahmenprofile an ihren Enden auf Gehrung, insbesondere in einem Winkel von 45° geschnitten sind. Durch diese Maßnahme lassen sich Modulrahmen herstellen, die auch hohen optischen Ansprüchen genügen, da die einzelnen Rahmenprofile nicht stumpf und optisch unschön aneinander liegen.

Die einzelnen Rahmenprofile sind bevorzugt mittels Verbindungselementen, insbesondere mittels Verbindungswinkeln verbunden. In einer bevorzugten Ausführungen sind diese Verbindungselemente als flache Verbindungswinkel ausgebildet, die in die offenen oder geschlossenen Halteschenkel der einzelnen Rahmenprofile des Modulrahmens eingebracht werden, so dass die auf Gehrung geschnittenen Oberflächen der Rahmenprofile sichtbar bleiben. In einer andern Ausführung ist es auch möglich, Verbindungswinkel zu verwenden, in welche die einzelnen Rahmenprofile eines Modulrahmens einsteckbar sind, so dass auch die Verbindungswinkel nach außen sichtbar sind, wie dies beispielsweise auch in der DE 295 21 277 U1 bereits beschrieben ist.

Um den erfindungsgemäßen Modulrahmen in, an oder auf einer Dachkonstruktion, insbesondere als Indachmodul zu befestigen, ist nach einer vorteilhaften Variante vorgesehen, dass der "untere" Profilrahmen an seinem Grundschenkel Befestigungspunkte aufweist. An diesen Befestigungspunkten kann das gesamte Modul beispielsweise mittels Schraubverbindungen am Dach (beispielsweise auf einer Dachlattung) befestigt werden. Natürlich ist es auch denkbar, dass die Befestigungspunkte zum Befestigen des Modulrahmens auf oder in einem Dach mit anderen Verbindungsarten ausgebildet sind. Dies können beispielsweise Verbindungen mittels Dübel, Rastverbindungen oder dergleichen oder auch ein Verkleben sein, wobei die Verbindungen sowohl mit als auch ohne abdichtende Mittel, wie beispielsweise Unterlegscheiben, verkapselte Kleber oder dergleichen ausgeführt werden können. Insbesondere beim Verkleben soll der Begriff Befestigungspunkt nicht nur punk- oder kreisscheibenförmig verstanden werden, vielmehr sollen damit auch Befestigungselemente verstanden werden, die sich wie beim Verkleben möglich, im Wesentlichen zumindest teilweise über die gesamte Längsausdehnung des unteren Profilrahmens erstreckt. Mittels dieser Befestigungspunkte ist es möglich, die Modulrahmen auch ohne weitere Vorbereitungsarbeiten auf eine bestehende Dachkonstruktion aufzubringen und dort zu fixieren.

Damit auch erfindungsgemäße Modulrahmen nebeneinander und nicht nur untereinander angeordnet werden können, sind Verbindungsprofile vorgesehen. In solche Verbindungsprofile werden rechte und linke Rahmenprofil nebeneinander anzuordnenden Modulrahmen mit ihren Seitenwänden eingelegt. Diese Verbindungsprofile dienen nicht ausschließlich zum Verbinden zweier Modulrahmen, vielmehr ist es damit auch möglich Feuchtigkeit und Wasser, welches sich zwischen den zu verbindenden Modulrahmen sammelt gezielt und sicher beispielsweise in eine Regenrinne des Daches abzuleiten. Entsprechend der im vorigen Absatz beschriebenen Befestigungspunkte für den unteren Modulrahmen können auch bei den Verbindungsprofilen entsprechende Befestigungspunkte vorgesehen sein, mit welchen die Verbindungsprofile ohne weitere Vorbereitungsarbeiten auf eine bestehende Dachkonstruktion aufgebracht und dort zu fixiert werden können.

Mit Hilfe solcher Verbindungsprofile lassen sich als ganze Modulreihungen aus mehreren nebeneinander angeordneten Modulanordnungen, welche jeweils aus einem erfindungsgemäßen Modulrahmen und einem Fotovoltaik- oder Solarmodul bestehen, erzeugen,.

Dabei hat es sich bewährt, dass das Verbindungsprofil einen Entwässerungskanal aufweist. Dieser Entwässerungskanal verläuft vorteilhafter Weise mittig entlang der Längserstreckung des Verbindungsprofils. Das Verbindungsprofil weist zudem eine Aufnahme zur Aufnahme eines Seitenschenkels eines linken Rahmenprofils eines ersten Modulrahmens und eine Aufnahme zur Aufnahme eines Seitenschenkels eines rechten Rahmenprofils eines zweiten Modulrahmens auf. So kann der Seitenschenkel des linken Rahmensprofils des ersten Modulrahmens in die eine Aufnehme und der Seitenschenkel des rechten Rahmensprofils des zweiten Modulrahmens in die andere Aufnahme unter Bildung des Entwässerungskanals zwischen den Aufnahmen eingelegt werden. Somit ist gewährleistet, dass von Modulanordnungen, welche jeweils aus einem erfindungsgemäßen Modulrahmen und einem Fotovoltaik- oder Solarmodul bestehen, ablaufendes Wasser sicher in den von den Aufnahmen getrennten Entwässerungskanal abgeleitet wird und nicht in die jeweilige Modulanordnung oder auch die Dachkonstruktion eindringen kann.

Dabei hat es sich als vorteilhaft erwiesen, dass das Verbindungsprofil Befestigungspunkte aufweist, welche bevorzugt im Bereich der Aufnahmen angeordnet sind. Auch durch die bevorzugte Anordnung der Befestigungspunkte ist die Dichtheit des Gesamtsystems nochmals verbessert, da im Entwässerungskanal keine Befestigungspunkte, die im Falle von Verschraubungen als Öffnungen ausgebildet sein müssten, notwendig sind. Somit ist auch das Verbindungsprofil in einfacher Weise in, an oder auf einer Dachkonstruktion zu befestigen.

Aus Gründen der Gewichtsreduzierung ist es vorteilhaft, wenn der erfindungsgemäße Modulrahmen beziehungsweise seine Einzelteile aus einem Leichtmetall, insbesondere aus Aluminium hergestellt ist

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen und deren Rückbeziehung. Es zeigen:
- Fig. 1:: ein Ausführungsbeispiel eines erfindungsgemäßen Modulrahmens mit darin angeordnetem Fotovoltaik- oder Solarmodul,
- Fig. 2:: ein Ausführungsbeispiel eines oberen Rahmenprofils eines erfindungsgemäßen Modulrahmens im Querschnitt zu seiner Längsachse,
- Fig. 3:: ein Ausführungsbeispiel eines unteren Rahmenprofils eines erfindungsgemäßen Modulrahmens im Querschnitt zu seiner Längsachse,
- Fig. 4:: ein Ausführungsbeispiel eines rechten Rahmenprofils eines erfindungsgemäßen Modulrahmens im Querschnitt zu seiner Längsachse,
- Fig. 5:: in Ausführungsbeispiel eines linken Rahmenprofils eines erfindungsgemäßen Modulrahmens im Querschnitt zu seiner Längsachse,
- Fig. 6:: eine Detailansicht eines erfindungsgemäßen Modulrahmens im Bereich des oberen Rahmenprofils,
- Fig. 7:: eine Detailansicht zweier miteinander verbundener erfindungsgemäßer Modulrahmen im Bereich ihrer Verbindung,
- Fig. 8:: eine Querschnittdarstellung eines erfindungsgemäßen Modulrahmens im Detail im Bereich des unteren Rahmenprofils
- Fig. 9:: eine Detailansicht eines erfindungsgemäßen Modulrahmens im Bereich des linken Rahmenprofils,
- Fig. 10:: eine Detailansicht eines erfindungsgemäßen Modulrahmens im Bereich des rechten Rahmenprofils,
- Fig. 11:: Darstellung eines Herstellungsschrittes für einen erfindungsgemäßen Modulrahmen,
- Fig. 12:: Darstellung eines weiteren Herstellungsschrittes für einen erfindungsgemäßen Modulrahmen und
- Figur 13:: Darstellung zweier erfindungsgemäßer Modulrahmen im Bereich ihrer Verbindung zusammen mit einem Verbindungsprofil;
- Figur 14:: eine Seitenansicht eines Dichtprofils; und
- Fig. 15: eine Seitenansicht der zusammengesteckten Profile aus Fig. 2 und 3.

In Figur 1 ist ein Ausführungsbeispiel eines erfindungsgemäßen Modulrahmens mit darin angeordnetem Fotovoltaik- oder Solarmodul 1 gezeigt, welche zusammen eine Modulanordnung ausbilden. Derartige Modulanordnungen werden vorzugsweise auf einem Dach aneinander gereiht, und zwar vorzugsweise in einer oder mehreren Reihen. Der Modulrahmen besteht dabei aus einem oberen, einem unteren, einem linken und einem rechten Rahmenprofil 2, 3, 4, 5.

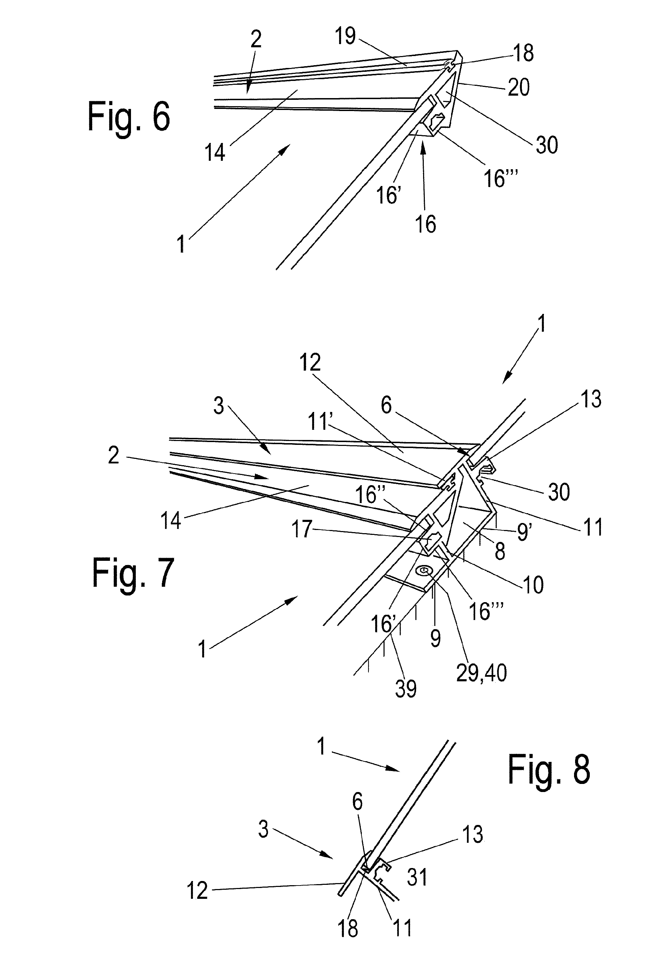

Die einzelnen Rahmenprofile 2, 3, 4, 5 des Ausführungsbeispiels gemäß Figur 1 sind in den Figuren 2 bis 5 in einer Querschnittdarstellung zur ihrer Längsachse im Detail dargestellt. Das obere und das untere Rahmenprofil 2, 3 jeder Modulanordnung sind in bevorzugter Einbaulage auf einem Dach horizontal ausgerichtet, wobei sie aber entsprechend der Neigung des Daches in sich gedreht sind, wie dies Fig. 7 veranschaulicht. Dabei kann ein Grundschenkel 9 des unteren Rahmenprofils 3 Befestigungspunkten 29 aufweisen, mittels welcher das untere Rahmenprofil und damit das gesamte Modul beispielsweise mit Hilfe von Schrauben 40 an einer bestehenden Dachkonstruktion 39 befestigt werden kann, ohne dass Vorbereitungsarbeiten an der Dachkonstruktion 39 notwendig sind.

Figur 2 zeigt dabei das obere Rahmenprofil 2 eines jeweiligen Modulrahmens. Ein vorteilhafter Bestandteil ist dabei ein Grundschenkel 14, auf dem ein Seitenschenkel 15 senkrecht angeordnet ist. An dem Seitenschenkel 15 ist wiederum ein Halteschenkel 16 senkrecht derart angeordnet, dass dieser mit einem Schenkelabschnitt 14' des Grundschenkels 14 eine Aufnahme 6 für das Fotovoltaik- oder Solarmodul 1 bildet.

Bei diesem Ausführungsbeispiel ist der Halteschenkel 16 aus drei Schenkelabschnitten 16', 16" und 16''' gebildet, die zusammen mit einem Schenkelabschnitt 15' des Seitenschenkels ein geschlossenes Hohlprofil beziehungsweise ein Profil mit einer Hohlkammer 17 bilden. Diese Hohlkammer 17 dient zur Aufnahme eines Verbindungselementes 28. Diese Ausgestaltung ist vorteilhaft, aber nicht zwingend.

Vorzugsweise liegt jeweils der untere Randschenkel 16'''(der Hohlkammer) des oberen Profils 2 einer unteren Modulanordnung in einer auf dem Schrägdach "vertikalen" Reihung benachbarter Modulanordnungen auf dem Schenkel 10 an der Ausnehmung 8 des jeweils unteren Profils 3 der benachbarten oberen Modulanordnung auf (Fig. 7). Durch die geschlossene Hohlkammer 17 wird auf einfache Weise verhindert, dass ein Schenkel 10 des Profils 3 in eine Öffnung rutschen könnte, wie sie an den teiloffenen Aufnahmen der anderen Profile des Modulrahmens ausgebildet sind (dies wird weiter unten noch näher erläutert). Bei entsprechender Bemaßung könnte die Hohlkammer 17 auch nicht umfangsgeschlossen gebildet werden, die geschlossene Ausgestaltung wird aber bevorzugt.

Ferner sind in diesem Ausführungsbeispiel der Grundschenkel 14 und der Seitenschenkel 15 über einen Diagonal-Verbindungsschenkel 20 über ihre gesamte Längserstreckung miteinander verbunden. Somit ist über die gesamte Längserstreckung des oberen Rahmenprofils 2 durch den Grundschenkel 14, den Seitenschenkel 15 und den Verbindungsschenkel 20 ein Hohlprofil 31 beziehungsweise Hohlkammerprofil gebildet. Der Grundschenkel 14, der Seitenschenkel 15 und der Verbindungsschenkel 20 bilden eine Art Keilform aus, was das Einführen in ein benachbartes Profil 3 auf einem Dach erleichtert, was weiter unten noch im Detail beschrieben wird. Wie aus Figur 2 weiterhin ersichtlich, weist der Grundschenkel 14 vorzugsweise eine Nut 18 auf, in welche eine in Figur 2 nicht dargestellte Dichtung 19 einbringbar ist (siehe Fig. 7, 14 und 15).

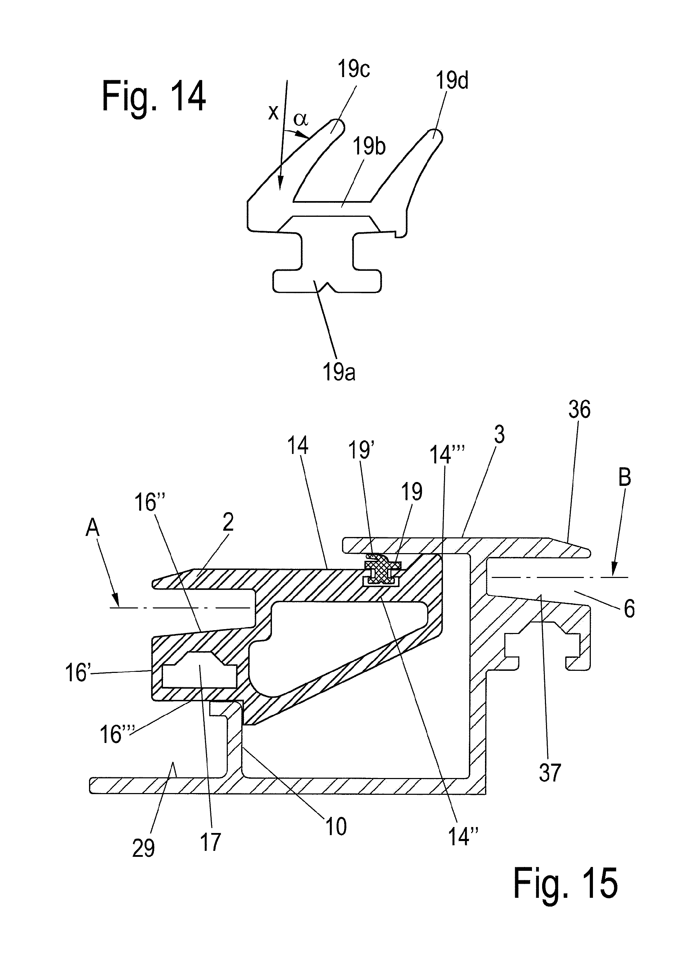

Figur 3 zeigt das untere Rahmenprofil 3. Besonders vorteilhafte Bestandteile sind dabei ein Grundschenkel 9, an dem ein Seitenschenkel 11 senkrecht angeordnet ist. An dem Seitenschenkel 11 ist wiederum ein Halteschenkel 13 senkrecht derart angeordnet, dass dieser mit einem Schenkelabschnitt 12' eines Abdeckschenkels 12 eine Aufnahme 6 für das Fotovoltaik- oder Solarmodul 1 bildet. Ein weiterer Schenkelabschnitt 12" des Abdeckschenkels 12 bildet zusammen mit dem Seitenschenkel 11 und einem auf dem Grundschenkel 9 senkrecht stehenden Halteschenkel 10 sowie einem Schenkelabschnitt 9' des Grundschenkels 9 eine Aufnahme 8 für ein oberes Rahmenprofil 2 eines weiteren Modulrahmens. Vorteilhaft ist die Aufnahme 8 derart bemessen bzw. auf die Abmessungen des Rahmenprofils 2 abgestimmt, dass die Aufnahme (8) in dem jeweils unteren Profil (3) einer benachbarten oberen Modulanordnung aus Modulrahmen und Modul 1 derart bemessen ist, dass das obere Rahmenprofil 2 der unteren Modulanordnung in der Aufnahme 8 beweglich ist (siehe Fig. 7 und 15) bzw. derart, dass sich das obere Rahmenprofil 2 - soweit es in die Aufnahme 8 eingreift - der unteren Modulanordnung etwas in der Aufnahme 8 bewegen kann, d.h., es besteht ein Spiel, welches die Montage erleichtert und auch einfache Weise einen Dilatationsausgleich ermöglicht (siehe Fig. 7).

Der Schenkelabschnitt 9' der Aufnahme 6 des unteren Rahmenprofils 3 soll danach größer sein als ein eingreifender Abschnitt 14" des eingreifenden Rahmenprofils 2. Am Schenkel 14 kann ferner eine im zusammengesetzten Zustand der Fig.7 in Richtung des jeweils oberen Rahmenprofils 3 vorstehender Vorsprung bzw. eine Erhöhung bzw. ein Vorsprung als Schenkelabschnitt 14''' ausgebildet sein. Dieser Vorsprung 14''' erschwert weiter den Durchtritt von Wasser zwischen den aufeinander liegenden Profile 2 und 3. Er kann auch als Auflagefläche dienen für das untere Profil der oberen benachbarten Modulanordnung. Auf der Erhöhung 14''' könnte auch eine Art Gleitauflage (oder ein Gleitschuh) z.B. aus Kunststoff ausgebildet sein (hier nicht dargestellt). Das untere Rahmenprofil 2 kann mit dem Keilabschnitt aus den Schenkeln 14, 5 und 20 in diese Aufnahme 8 auf einfache Weise auf dem Dach bei der Montage einer Anordnung aus mehreren Modulrahmen mit Modulen eingeschwenkt werden.

Fig. 15 zeigt zur besseren Veranschaulichung dieser Zusammenhänge eine Seitenansicht der zusammengesteckten Profile aus Fig. 2 und 3 (ähnlich zu Fig. 7) ohne Solarmodule. Es ist gut zu erkennen, dass sich das untere Rahmenprofil 3 in seinem in die Aufnahme eingeschwenkten Zustand etwas im oberen Rahmenprofil 2 bewegen kann.

Gut zu erkennen ist in Fig. 15 ferner, dass die Aufnahme 6 dieses Profils (wie auch die Aufnahme 6 der anderen Profile des Rahmen zum äußeren Rand hin sich aufweitend ausgebildet sein kann, um das Einführen der eigentlichen Solarmodule zu erleichtern. Dies kann beispielsweise dadurch erreicht werden, dass an der Aufnahme 6 - hier des oberen Rahmenprofils 3 - eine Einführschräge 37 ausgebildet wird.

Zudem kann an dem oberen Rahmenprofil auch der obere auf dem Solarmodul aufliegende Schenkel 12 an der Aufnahme 6 leicht angeschrägt werden bzw. eine Entwässerungsschräge 36 aufweisen, die es erleichtert, dass über das Modul auf dem Schrägdach nach unten ablaufendes Wasser über den Verbindungsbereich der beiden zusammengesetzten Rahmenprofile 2 und 3 nach unten strömen kann.

Aus dem Zusammenspiel der Fig. 7 und 15 ist ferner ersichtlich, dass die eigentlichen Module 1 in den zusammengesteckten Rahmenprofilen 2 und 3 nicht in einer Ebene liegen bzw. miteinander fluchten. Das jeweils weiter unten auf dem Schrägdach angeordnete Modul im Rahmenprofil 2 liegt relativ zu der von dem jeweils benachbarten oberen Modul im Rahmenprofil 3 definierten Ebene B unterhalb dieser Ebene bzw., in einer dazu "tieferen" Ebene A. Hierdurch bildet sich über eine "vertikale" Reihung von Modulanordnungen eine Stufung aus, welche wiederum der verbesserten Wasserableitung auf dem Dach dient.

Der Halteschenkel 13 ist bei dem hier dargestellten Ausführungsbeispiel derart ausgebildet, dass durch ihn in Längserstreckung des unteren Rahmenprofils 3 ein Hohlkammerprofil 30 gebildet ist, vorzugsweise zur Aufnahme eines Verbindungselementes 28.

Die Figuren 4 und Figur 5 zeigen ein linkes beziehungsweise rechtes Rahmenprofil 4 und 5. Diese Profile 4, 5 sind spiegelsymmetrisch aufgebaut und weisen jeweils deshalb die gleichen Elemente auf, welche auch die gleichen Funktionen erfüllen. Es sind damit besonders vorteilhaft vorzugsweise nur drei verschiedene Profile herzustellen, um den Rahmen der Fig. 1 zu realisieren, denn die Profile 4 und 5 werden für ihren Einsatz am rechten oder linken Modulrand einfach um 180 gedreht.

Vorzugsweise bestehen das rechte und linke Rahmenprofil 4 und 5 dabei vorzugsweise aus einem Grundschenkel 22, an dem drei Seitenschenkel 23, 24 und 25 senkrecht beabstandet angeordnet sind. An dem Seitenschenkel 25 ist wiederum ein Halteschenkel 26 senkrecht derart angeordnet, dass dieser mit einem Schenkelabschnitt 22' eines Grundschenkels 22 eine Aufnahme 6 für das Fotovoltaik- oder Solarmodul 1 bildet.

Der Halteschenkel 26 ist in diesem Ausführungsbeispiel derart ausgebildet, dass durch ihn in Längserstreckung des linken beziehungsweise rechten Rahmenprofils 4, 5 ein Hohlprofil 30 beziehungsweise eine Hohlkammerprofil gebildet ist.

Figur 6 zeigt nunmehr ein oberes Rahmenprofil 2, in dessen Aufnahme 6 zwischen Grundschenkel 14 und Halteschenkel 16 bereits ein Fotovoltaik- oder Solarmodul 1 eingesetzt ist. Ferner ist in dieser Ansicht auch die bereits in die Nut 18 eingesetzte Dichtung 19 dargestellt. Diese Dichtung 19 dichtet die Aufnahme 8 eines mit diesem oberen Rahmenprofil 2 verbundenen unteren Rahmenprofils 3 eine weiteren Modulrahmens gegen Feuchtigkeit ab, wie dies insbesondere aus Figur 15 ersichtlich ist.

Die vorzugsweise eingesetzte Dichtung 19 - siehe auch Fig. 14 - liegt dabei zwischen dem Abdeckschenkel des unteren Rahmenprofils 3 und dem Grundschenkel 14 des oberen Rahmenprofils 2 über deren gesamte Längserstreckung an. Feuchtigkeit kann somit bei auf einem Dach montierten Modulrahmen ebenso wenig durch ablaufendes Wasser in die Aufnahme 8 des unteren Rahmenprofils 3 eindringen wie durch Adhäsion oder Winddruck.

Die Dichtung 19 wird vorzugsweise als Dichtprofil ausgebildet bzw. aus einem solchen abgelängt. Sie weist einen Dichtfuss19a auf, der in die Nut 18 eingreift. Oberhalb des Dichtfußes 19a ist der eigentliche Dichtbereich 19b ausgebildet. Dieser Dichtbereich kann auf verschiedene Wiese beschaffen sein. So kann er eine oder mehrere Dichtlippen 19c, 19d, aufweisen (Figur 14) oder aber auch - wie in Fig. 7 ersichtlich - ballig ausgebildet sein.

Vorzugsweise weist der Dichtbereich zwei Dichtlippen 19c, 19 d auf, die relativ zur Einsteckrichtung X des Dichtfußes 19 in die Nut 18 in einem spitzen Winkel α größer 0° ausgerichtet sind. Beim Zusammensetzen der Modulanordnung biegen sich diese Dichtlippen "nach unten" und sorgen in ihrem Zusammenwirken für eine besonders vorteilhafte Abdichtung und kennzeichnen sich darüber hinaus durch ihre Gleitfähigkeit zum Dilatationsausgleich aus.

Dabei können der Dichtfuß und der eigentliche Dichtbereich aus einem einheitlichen Material bestehen oder aber auch aus verschiedenen (beispielsweise koextrudierten) Materialien, wobei dann bevorzugt wird, dass der Dichtfuß 19a aus einem härteren Material besteht als der Dichtbereich 19b (und ggf. die Dichtlippe(n) 19c, 19d).

In Figur 8 ist eine Schnittdarstellung im Detail eines unteren Rahmenprofils 3 dargestellt, in dessen durch den Abdeckschenkel 12, den Seitenschenkel 11 und den Halteschenkel 13 gebildete Aufnahme 6 bereits ein Fotovoltaik- beziehungsweise Solarmodul 1 eingesetzt ist.

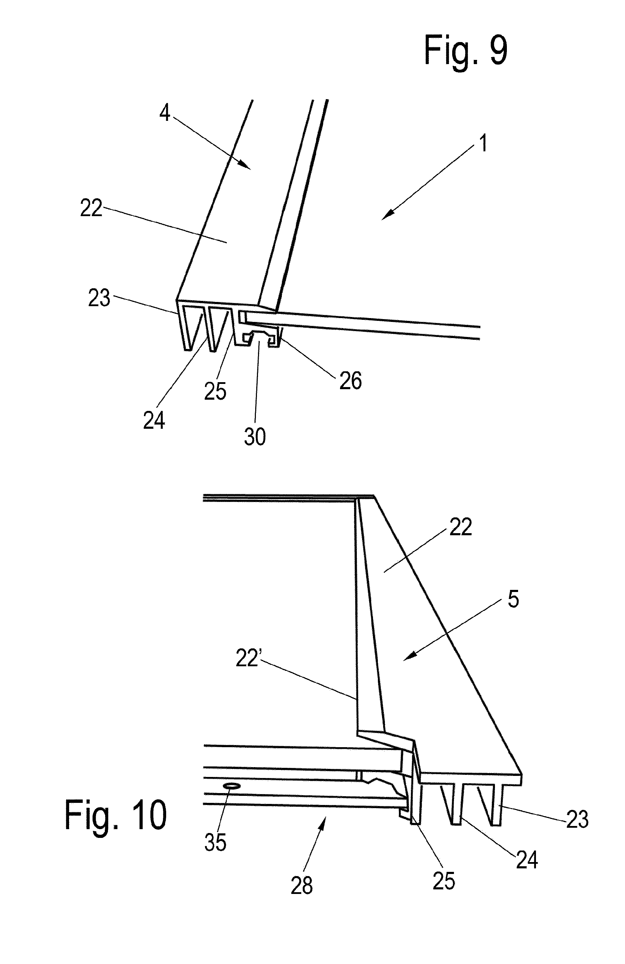

Figur 9 zeigt ein linkes Rahmenprofil 4 mit einem in seine durch den Grundschenkel 22, den Seitenschenkel 25 und den Halteschenkel 26 gebildete Aufnahme 6 bereits eingesetztem Fotovoltaik- beziehungsweise Solarmodul 1.

Figur 10 zeigt ein rechtes Rahmenprofil 5 mit einem in seine durch den Grundschenkel 22, den Seitenschenkel 25 und den Halteschenkel 26 gebildete Aufnahme 6 bereits eingesetztem Fotovoltaik- beziehungsweise Solarmodul 1. Allerdings ist in das rechte Rahmenprofil 5 hier bereits ein Verbindungselement 28 eingesetzt. In dieser Darstellung ist ersichtlich, dass in die Hohlprofile 30 des rechten Rahmenprofils ein als Verbindungswinkel ausgebildetes Verbindungselement eingeführt ist, das die beiden Rahmenprofile 3, 5 miteinander verbindet und gegeneinander fixiert. Gut zu erkennen ist ferner, dass das untere Rahmenprofil 3 an seinem Grundschenkel 9 Befestigungspunkte 29, vorzugsweise eine Befestigungsnut/-kerbe aufweist. Vorzugsweise Bohrungen 35 - insbesondere mit einem Gewinde und in den Profilen 4, 5 an der Seite - siehe Fig. 10, dienen dabei als Befestigungsmöglichkeit zur Befestigung auf einem Dach.

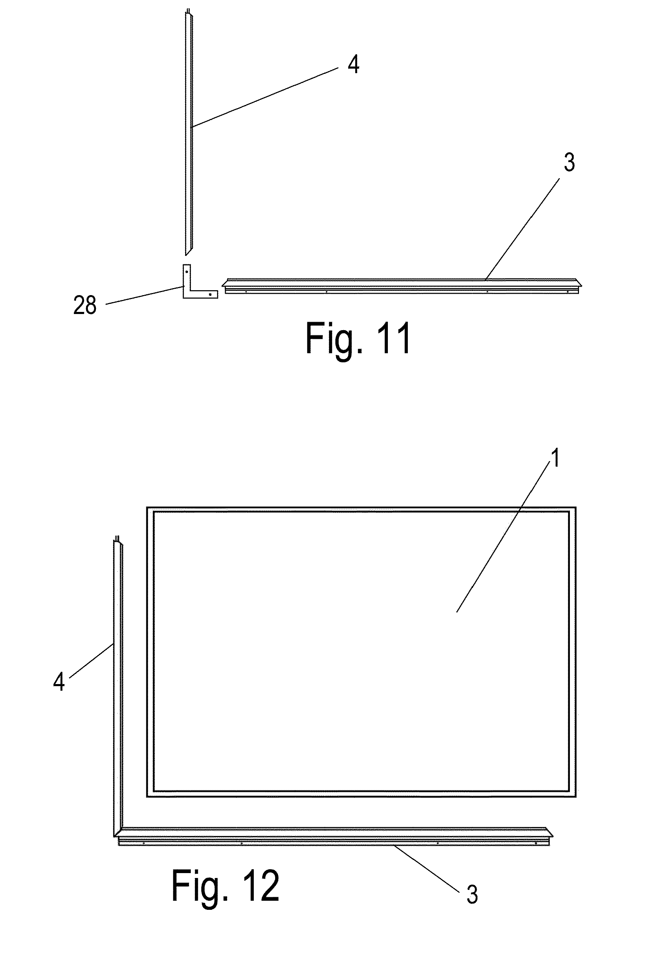

In den Darstellungen gemäß den Figuren 10 und 11 sind beispielhaft Montageschritte dargestellt, um einen erfindungsgemäßen Modulrahmen mit einem darin aufgenommen Fotovoltaik- beziehungsweise Solarmodul 1 zusammenzusetzen. Dazu wird in einem ersten Schritt das linke und untere Rahmenprofil 4 und 3 mittels eines als Verbindungswinkel ausgebildeten Verbindungselementes 28 miteinander verbunden, indem der Verbindungswinkel in die jeweilige dazu vorgesehene Aufnahme in Form der Hohlprofile 30 eingebracht und dort fixiert werden.

Nunmehr muss das Fotovoltaik- beziehungsweise Solarmodul 1 in die dafür vorgesehenen Aufnahmen 6 des linken und unteren Rahmenprofils 4 und 3 eingesetzt werden. Hierbei ist allerdings darauf zu achten, dass diese Aufnahmen 6 über ihre gesamte Längserstreckung zuvor ausreichend mit Silikonmaße gefüllt wurden, damit eine flüssigkeitsdichte Abdichtung zwischen Modulrahmen und Fotovoltaik- beziehungsweise Solarmodul 1 gewährleistet ist. In weiteren nicht dargestellten Herstellungsschritten werden nunmehr auch das obere und das rechte Rahmenprofil 2, 5 entsprechend an den unteren beziehungsweise linken Rahmenprofil 3, 4 angeordnet sowie dem Fotovoltaik- beziehungsweise Solarmodul 1 und ebenfalls mittels eines als Verbindungswinkel ausgebildeten Verbindungselementes 28 miteinander verbunden.

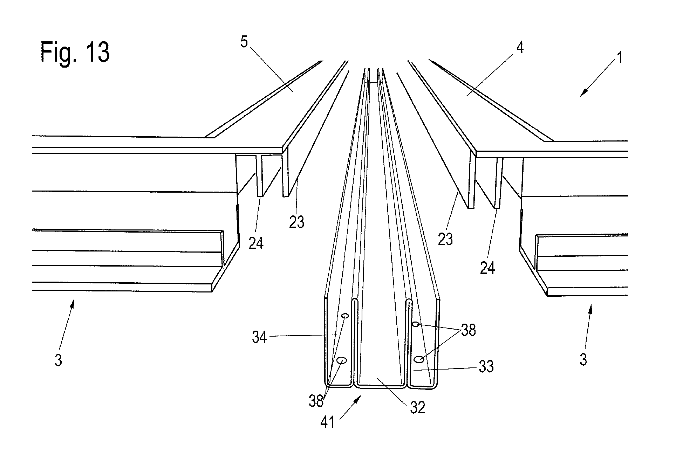

Figur 13 zeigt ein vorteilhaftes Verbindungsprofil 41, mit dem erfindungsgemäße Modulrahmen auch nebeneinander bei gleichzeitiger Sicherung einer Wasserabführung angeordnet werden können. Das Verbindungsprofil 41 weist dabei jeweils eine Aufnahme 33, 34 für die Seitenschenkel 24 des rechten Rahmenprofils 5 und des linken Rahmenprofils 4 auf. Ferner weist das Verbindungsprofil 41 einen Entwässerungskanal 32 auf, in welchen die Seitenschenkel 23 des rechten Rahmenprofils 5 und des linken Rahmenprofils 4 eingreifen. Über diesen Entwässerungskanal 32 kann Flüssigkeit, die sich zwischen zwei Modulrahmen ansammelt beispielsweise in eine Regenrinne abgeführt werden.

Optional kann eine flüssigkeitsdichte Abdichtung zwischen dem Entwässerungskanal 32 und den Aufnahmen 33, 34 eingesetzt werden, um den Eintritt von Regenwasser unter den Modulrahmen wirkungsvoll entgegenzutreten.

Das Verbindungsprofil 41 ist so ausgelegt, dass die senkrechten Stege des Verbindungsprofil 41 eine derart ausreichende Steighöhe aufweisen, dass Flüssigkeiten wie Regenwasser sicher abgeleitet werden bzw. nicht durch Adhäsion oder Winddruck unter die Modulrahmen gelangen kann. Auf Dichtungen kann derart am Verbindungsprofil 41 verzichtet werden. Dies ist kostengünstig. Zudem sorgt der Verzicht auf Dichtungen für eine zusätzliche Hinterlüftung, da Luft durch das Verbindungsprofil 41 unter die Module strömen kann.

Das Verbindungsprofil 41 kann zudem Befestigungspunkte 38 aufweisen, mit welchen es direkt in, an oder auf einer Dachkonstruktion 39 befestigbar ist. Sofern das Verbindungsprofil 41 auf einer bestehende Dachkonstruktion 39 aufgebracht wird, ist dies möglich, ohne dass an der Dachkonstruktion 39 zuvor Vorbereitungsarbeiten durchgeführt werden müssen. Die Verbindungen des Verbindungsprofil 41 mit der Dachkonstruktion 39 kann auch hier mittels Dübel, Rastverbindungen oder dergleichen oder auch Verkleben hergestellt werden, wobei die Verbindung sowohl mit als auch ohne abdichtende Mittel, wie beispielsweise Unterlegscheiben, verkapselte Kleber oder dergleichen ausgeführt werden kann. Insbesondere beim Verkleben soll der Begriff Befestigungspunkt nicht nur punk- oder kreisscheibenförmig verstanden werden, vielmehr sollen damit auch Befestigungselemente verstanden werden, die sich wie beim Verkleben möglich, im Wesentlichen zumindest teilweise über die gesamte Längsausdehnung des Verbindungsprofil 41 erstrecken.

Die Befestigungspunkte 38 sind im vorliegenden Beispiel vorzugsweise im Bereich der Aufnahmen 33 und 34 angeordnet. Dies hat den Hintergrund, das bei Schraubverbindungen die Befestigungspunkte 38 als Öffnungen ausgebildet sein müssen, um die Schrauben dort durchführen zu können. Würde man solche Befestigungspunkte 38 in Form von Öffnungen im Entwässerungskanal 32 anbringen, entstünden dort Schwachstellen hinsichtlich der Dichtheit, so dass gegebenenfalls während des Entwässerns eines Daches Feuchtigkeit in die Dachkonstruktion 39 eindringen kann, was wiederum Folgeschäden am Dach nach sich ziehen würde.

### Bezugszeichenliste

- 1: Fotovoltaik-, Solarmodul
- 2: oberes Rahmenprofil
- 3: unteres Rahmenprofil
- 4: linkes Rahmenprofil
- 5: rechtes Rahmenprofil
- 6: Aufnahme
- 7: Hohlprofil
- 8: Aufnahme
- 9: Grundschenkel
- 9': Schenkelabschnitt
- 10: Halteschenkel
- 11: Seitenschenkel
- 12: Abdeckschenkel
- 12': Schenkelabschnitt
- 12": Schenkelabschnitt
- 13: Halteschenkel
- 14: Grundschenkel
- 14', 14", 14''': Schenkelabschnitte
- 15: Seitenschenkel
- 15': Schenkelabschnitt
- 16: Halteschenkel
- 16': Schenkelabschnitt
- 16": Schenkelabschnitt
- 16''': Schenkelabschnitt
- 17: Hohlprofil
- 18: Nut
- 19: Dichtung
- 19a: Fußabschnitt
- 19b: Dichtabschnitt
- 19c: Dichtlippe
- 19d: Dichtlippe
- 20: Verbindungsschenkel
- 21: Hohlprofil
- 22: Grundschenkel
- 23: Seitenschenkel
- 24: Seitenschenkel
- 25: Seitenschenkel
- 26: Halteschenkel
- 27: Mittelachse
- 28: Verbindungselemente
- 29: Befestigungspunkte
- 30: Hohlprofil
- 31: Hohlprofil
- 32: Entwässerungskanal
- 33: Aufnahme
- 34: Aufnahme
- 35: Bohrung
- 36: Entwässerungsschräge
- 37: Einführschräge

- 38: Befestigungspunkt
- 39: Dachkonstruktion
- 40: Schraube
- 41: Verbindungsprofil

## Patentansprüche

1. Modulrahmen für ein Fotovoltaik- oder Solarmodul (1), welches folgendes aufweist:
a) ein oberes Rahmenprofil (2),
b) ein unteres Rahmenprofil (3),
c) ein linkes Rahmenprofil (4) und
d) ein rechtes Rahmenprofil (5),
e) wobei jedes der Rahmenprofile (2, 3, 4, 5) eine Aufnahme (6) für das Fotovoltaik- oder Solarmodul (1) aufweist,
**dadurch gekennzeichnet, dass**
f) das untere Rahmenprofil (3) als offenes Hohlprofil (7) ausgebildet ist und eine Aufnahme (8) für ein oberes Rahmenprofil (2) eines weiteren Modulrahmens aufweist.

2. Modulrahmen nach Anspruch 1, **dadurch gekennzeichnet, dass** das untere Rahmenprofil (3) einen Grundschenkel (9), einen darauf im Wesentlichen senkrecht stehenden Halteschenkel (10), einen Seitenschenkel (11), einen oberen Abdeckschenkel (12) und einen weiteren Halteschenkel (13) aufweist.

3. Modulrahmen nach Anspruch 2, **dadurch gekennzeichnet, dass** ein Schenkelabschnitt (12') des Abdeckschenkels (12) zusammen mit dem Halteschenkel (13) und einem Schenkelabschnitt (11') des Seitenschenkels (11) die Aufnahme (6) für das Fotovoltaik- oder Solarmodul (1) bildet.

4. Modulrahmen nach Anspruch 2 oder 3, **dadurch gekennzeichnet, dass** ein Schenkelabschnitt (12" 12') des Abdeckschenkels (12) zusammen mit einem Schenkelabschnitt (9') des Grundschenkels (9), dem Halteschenkel (10) und dem Seitenschenkel (11) die Aufnahme (8) für das obere Rahmenprofil (2) des weiteren benachbarten Modulrahmens bildet.

5. Modulrahmen nach Anspruch 1, 2 oder 3 oder 4, **dadurch gekennzeichnet, dass** das obere Rahmenprofil (2) einen Grundschenkel (14), einen darauf im Wesentlichen senkrecht stehenden Seitenschenkel (15) und einen Halteschenkel (16) aufweist, wobei vorzugsweise ein Schenkelabschnitt (14') des Grundschenkels (14) zusammen mit dem Halteschenkel (16) des Seitenschenkels (15) die Aufnahme (6) für das eigentliche Fotovoltaik- oder Solarmodul (1) bildet und wobei vorzugsweise der Halteschenkel (16) mit Teilabschnitten (16', 16", 16''') und einem Teilabschnitt (15') des Seitenschenkel (15) ein Hohlprofil (17) bildet.

6. Modulrahmen nach einem der vorstehenden Ansprüche, **dadurch gekennzeichnet, dass** der Grundschenkel (14) eine Nut (18) zur Aufnahme einer Dichtung (19) aufweist und dass der Grundschenkel (14) vorzugsweise zusammen mit dem darauf im Wesentlichen senkrecht stehenden Seitenschenkel (15) und einem Verbindungsschenkel (20) ein Hohlkammerprofil ausbilden.

7. Modulrahmen nach einem der vorstehenden Ansprüche, **dadurch gekennzeichnet, dass** der Grundschenkel (14) zusammen mit dem darauf im Wesentlichen senkrecht stehenden Seitenschenkel (15) und einem Verbindungsschenkel (20) einen Keilabschnitt ausbilden und dass vorzugsweise der Keilabschnitt in die Aufnahme (8) einschwenkbar ist.

8. Modulrahmen nach einem der vorstehenden Ansprüche, **dadurch gekennzeichnet, dass** am Grundschenkel (14) ein Vorsprung (14''') ausgebildet ist.

9. Modulrahmen nach einem der vorstehenden Ansprüche, **dadurch gekennzeichnet, dass** das linke und rechte Rahmenprofil (4, 5) im Wesentlichen aus einem Grundschenkel (22) und darauf im Wesentlichen senkrecht stehenden Seitenschenkeln (23, 24, 25) und einem an dem Seitenschenkel (25) angeordneten Halteschenkel (26) bestehen und dass vorzugsweise das linke und rechte Rahmenprofil (4, 5) im montierten Zustand im Wesentlichen spiegelsymmetrisch zu einer Mittelachse (27) des Fotovoltaik- oder Solarmoduls (1) ausgebildet sind.

10. Modulrahmen nach einem der vorstehenden Ansprüche, **dadurch gekennzeichnet, dass** die einzelnen Rahmenprofile (2, 3, 4, 5) an ihren Enden zumindest teilweise auf Gehrung, insbesondere in einem Winkel von 45° geschnitten sind und die einzelnen Rahmenprofile (2, 3, 4, 5) vorzugsweise mittels Verbindungselementen (28), insbesondere mittels Verbindungswinkeln (28) verbunden sind und/oder dass das untere Rahmenprofil (3) an seinem Grundschenkel (9) Befestigungspunkte (29) vorzugsweise eine Befestigungsnut/-kerbe aufweist.

11. Modulrahmen nach einem der vorstehenden Ansprüche, **dadurch gekennzeichnet, dass** die Dichtung (19) als Abschnitt eines Dichtprofil ausgebildet ist, welches einen Dichtfuß (19a) auf, der in die Nut (18) eingreift, wobei ferner an dem Dichtprofil ein Dichtbereich (19b) vorgesehen ist und dass vorzugsweise der Dichtbereich (19b) eine oder mehrere Dichtlippen (19c, 19) aufweist und dass vorzugsweise die eine oder mehreren Dichtlippen (19c, 19 d) relativ zur Einsteckrichtung X des Dichtfußes (19a) in die Nut (18) in einem spitzen Winkel größer 0° ausgerichtet sind und/oder dass der Dichtfuß (19a) und der eigentliche Dichtbereich (19b) aus verschiedenen Materialien bestehen.

12. Modulrahmen nach einem der vorstehenden Ansprüche, **dadurch gekennzeichnet, dass** die Aufnahme (8) in dem jeweils unteren Profil (3) einer benachbarten oberen Modulanordnung aus Modulrahmen und Modul (1) derart bemessen ist, dass das obere Rahmenprofil (2) der unteren Modulanordnung in der Aufnahme (8) beweglich ist und/oder dass jeweils der untere Randschenkel (16''') in einer Anordnung benachbarter Module (1) mit Modulrahmen auf dem Schenkel (10) der jeweils oberen Profils (3) aufliegt.

13. Modulrahmen nach einem der vorstehenden Ansprüche, **dadurch gekennzeichnet, dass** wenigstens eine oder mehrere der Aufnahmen (6) zum äußeren Rand der Aufnahme(n) (6) hin sich aufweitend ausgebildet sind und/oder dass an dem oberen Rahmenprofil (3) der obere auf dem Solarmodul aufliegende Schenkel eine Entwässerungsschräge (36) aufweist.

14. Modulrahmen nach einem der vorstehenden Ansprüche, **dadurch gekennzeichnet, dass** die Module (1) der zusammengesteckten oberen und unteren Rahmenprofile (2 und 3) benachbarter Modulanordnungen nicht in einer Ebene liegen bzw. miteinander fluchten sondern dass das jeweils weiter unten auf dem Schrägdach angeordnete Modul im Rahmenprofil (2) relativ zu der von dem jeweils benachbarten oberen Modul im Rahmenprofil (3) definierten Ebene unterhalb dieser Ebene bzw. in einer dazu "tieferen" Ebene liegt.

15. Modulanordnung aus einem Modulrahmen nach einem der vorstehenden Ansprüche 1 bis 14 und einem Fotovoltaik- oder Solarmodul (1).

16. Modulreihung, die aus mehreren der Modulanordnungen nach Anspruch 15 besteht.

17. Modulreihung nach Anspruch 16, **dadurch gekennzeichnet, dass** zwei Modulrahmen mittels eines Verbindungsprofils (41) nebeneinander anordenbar sind, wobei vorzugsweise das Verbindungsprofil (41) einen Entwässerungskanal (32) aufweist.

18. Modulreihung nach Anspruch 17, **dadurch gekennzeichnet, dass** das Verbindungsprofil (41) eine Aufnahme (33) zur Aufnahme eines Seitenschenkels (23) eines linken Rahmenprofils (3) eines ersten Modulrahmens und eine Aufnahme (34) zur Aufnahme eines Seitenschenkels (23) eines rechten Rahmenprofils (4) eines zweiten Modulrahmens aufweist.

19. Modulreihung nach einem der Ansprüche 17 bis 18, **dadurch gekennzeichnet, dass** das Verbindungsprofil (41) Befestigungspunkte (38) aufweist, welche bevorzugt im Bereich der Aufnahmen (33, 34) angeordnet sind.
